# EUROPÄISCHE PATENTSCHRIFT

(11) **EP 1 206 381 B1**
(45) Veröffentlichungstag und Bekanntmachung des Hinweises auf die Patenterteilung: **25.02.2004**
(21) Anmeldenummer: 00951401.9
(22) Anmeldetag: 18.07.2000
(51) Int. Cl.: B64B 1/58, F17B 1/26

(54) **VERFAHREN ZUM BEFÜLLEN, REINIGEN UND ENTLEEREN VON GROSSVOLUMIGEN GASBEHÄLTERN, INSBESONDERE LUFTSCHIFFEN**
METHOD FOR FILLING, CLEANING AND EMPTYING LARGE VOLUME GAS CONTAINERS, ESPECIALLY AIRSHIPS
PROCEDE POUR REMPLIR ET PURGER DES RESERVOIRS DE GAZ A GRAND VOLUME, NOTAMMENT DES AEROSTATS, ET POUR PURIFIER LE GAZ CONTENU DANS LEDIT RESERVOIR

(30) Priorität: 20.07.1999 DE 19934015
(43) Veröffentlichungstag der Anmeldung: 22.05.2002
(73) Patentinhaber: Sauer, Thomas Claude, 60439 Frankfurt/Main (DE)
(72) Erfinder: SILLAT, Diethard, D-82152 Martinsried (DE); SAUER, Thomas, C., D-60439 Frankfurt/Main (DE)
(74) Vertreter: Strobel, Wolfgang, Dipl.-Ing.
(86) Internationale Anmeldenummer: PCT/EP2000/006865
(87) Internationale Veröffentlichungsnummer: WO 2001/005653

(56) Entgegenhaltungen:
- DE-C- 403 834
- US-A- 5 368 067
- US-A- 5 454 408

## Beschreibung

Die Erfindung betrifft ein Verfahren zum Befüllen von großvolumigen Gasbehältern, insbesondere Luftschiffen, mit einem Prozeßgas sowie ein Verfahren zum Reinigen des in einem solchen Gasbehälter enthaltenen Prozeßgases und ein Verfahren zum Entleeren solcher Gasbehälter.

In jüngster Zeit wird die in den letzten Jahren in Vergessenheit geratene Luftschiffahrt wieder aktuell. Dabei werden vor allem mit Helium gefüllte Luftschiffe vorgeschlagen, die für vielfältige Einsatzmöglichkeiten, insbesondere auch zum Transport von schweren Lasten, eingesetzt werden sollen. Selbstverständlich müssen solche Luftschiffe zunächst mit dem für den Auftrieb sorgenden Gas, z.B. Helium, gefüllt werden. In der vorliegenden Patentanmeldung wird dieses für die Befüllung des Gasbehälters vorgesehene Gas als Prozeßgas bezeichnet. Nach einer gewissen Betriebsdauer treten in dem im Luftschiff vorhandenen Prozeßgas Verunreinigungen auf, die eine Verminderung des Auftriebs bewirken. Beispielsweise entspricht eine Verunreinigung der Heliumfüllung mit einem 5 %igen Anteil an Luft einen um 5 % geringeren Auftrieb gegenüber einer Füllung mit nabezu 100 % reinem Helium. Deshalb muß die Prozeßgasfüllung des Luftschiffs von Zeit zu Zeit gereinigt werden. Ein solches Verfahren zeigt die DE 403 834 C. Schließlich muß das Luftschiff z.B. zu Wartungsarbeiten auch entleert werden. Bei kleinen und mittelgroßen Luftschiffen mit bis ca. 6.000 m³ Gasfassungsvermögen erfolgt die Füllung oder Wiederbefüllung üblicherweise aus Gasflaschentransportfahrzeugen, sog. Flaschentrailern. Für Großluftschiffe mit einem Gasfassungsvermögen von über 6.000 m³ (z.B. 400.000 m³) ist es bisher unmöglich, diese Gasmenge in vertretbar kurzer Zeit zur Verfügung zu stellen. Zu lange Standzeiten für das Füllen, Reinigen und Wiederbefüllen des Luftschiffs würden aber die Wirtschaftlichkeit dieses Transportsystems möglicherweise in Frage stellen.

Der vorliegenden Erfindung liegt daher die Aufgabe zugrunde, eine Methode zum Füllen, Reinigen und Entleeren von Gasbehältern zur Verfügung zu stellen, mit der auch sehr große Gasbehälter in wirtschaftlich vertretbarer Zeit befüllt, gereinigt und entleert werden können.

Diese Aufgabe wird bezüglich der Befüllung des Gasbehälters durch das in Anspruch 1 definierte Verfahren gelöst.

Wie bereits in der Beschreibungseinleitung erwähnt, wird in der vorliegenden Patentanmeldung das eigentlich zur Befüllung des Gasbehälters vorgesehene Gas als Prozeßgas bezeichnet. Insbesondere für den Einsatz in Luftschiffen wird als Prozeßgas ein Gas oder Gasgemisch mit geringerer Dichte als Luft, vorzugsweise Helium, Wasserstoff oder ein Helium-Wasserstoff-Gemisch verwendet.

Von diesem Prozeßgas ist das Hilfsgas zu unterscheiden, das lediglich den Befülloder Entleervorgang unterstützt. Grundsätzlich wird ein Hilfsgas verwendet, das eine höhere oder niedrigere Dichte als das Prozeßgas aufweist, wobei die Differenz der Dichten von Hilfsgas und Prozeßgas vorzugsweise mindestens 15 % beträgt Insbesondere beim Befüllen oder Entleeren von Luftschiffen wird als Hilfsgas ein Gas oder Gasgemisch mit gleicher oder höherer Dichte als Luft verwendet. Im einfachsten Fall besteht das Hilfsgas aus Luft. Zweckmäßigerweise wird der Gasbehälter mit dem Hilfsgas vollständig gefüllt, bevor das Prozeßgas eingebracht wird.

Unter beruhigtem Einbringen des Prozeßgases ist zu verstehen, daß durch die Gaseinleitung möglichst keine oder nur geringe turbulente Gasströmungen im Gasbehälter erzeugt werden, die eine zusätzlich Vermischung des eingeleiteten Prozeßgases mit dem im Gasbehälter bereits vorhandenen Gas bewirken würden. Strömungsgeschwindigkeit, Einströmquerschnitt und Eintragsort werden so abgestimmt, daß eine Verwirbelung des eingetragenen Prozeßgases weitgehend ausgeschlossen werden kann. Es wird lediglich die beispielsweise im unteren Bereich des Gasbehälters abgezogene Menge an Hilfsgas durch Zufuhr von Prozeßgas beispielsweise im oberen Bereich des Gasbehälters wieder ersetzt.

Bevorzugt erfolgt der Gasaustausch möglichst schnell, damit die Diffusion der beiden Medien nur unbedeutend bleibt. Zweckmäßigerweise dauert der Gasaustausch weniger als 20 Stunden.

Durch das Einbringen des Prozeßgases in den Gasbehälter bildet sich durch physikalische Effekte (z.B. Diffusion, Konvektion) eine Mischzone aus, in der Prozeßgas und Hilfsgas mit einem Konzentrationsgefälle innerhalb der Mischzone vermischt sind. In dem Fall, daß das Prozeßgas eine geringere Dichte als das Hilfsgas aufweist, wandert diese Mischzone mit zunehmendem Befüllfortschritt nach unten, bis die Mischzone schließlich in den unteren Bereich des Gasbehälters gelangt Im umgekehrten Fall wandert die Mischzone nach oben. Das Gasgemisch Prozeßgas/ Hilfsgas kann ab einer Mindesprozeßgaskonzentration von 50 % einer Reinigungsanlage zugeführt werden.

Da thermische Effekte die Vermischung von Prozeßgas und Hilfsgas beeinflussen können, sollten Temperaturunterschiede zwischen Prozeßgas und Hilfsgas beachtet werden. Dabei können Temperaturdifferenzen entweder vermieden werden, um zusätzliche Einflüsse auszuschalten, oder gezielt eingesetzt werden, um bewußt Dichteunterschiede aufgrund der Temperaturunterschiede zwischen Prozeßgas und Hilfsgas zu erzeugen.

Nachdem der Befüllvorgang beendet ist und der Betrieb des Gasbehälters aufgenommen wurde, kann mit zunehmender Zeit eine Verunreinigung des Heliums erfolgen, z. B. durch Diffusion von Luft durch die Wandung des Behälters. Zum Reinigen des in dem Gasbehälter befindlichen Prozeßgases wird gereinigtes oder frisches Prozeßgas mit einer höheren Reinheit als das im Gasbehälter bereits enthaltene Prozeßgas derart beruhigt in den Gasbehälter eingebracht, daß keine wesentliche Vermischung mit dem im Gasbehälter befindlichen verunreinigten Prozeßgas erfolgt, gemäß dem in Anspruch 2 definierten Verfahren.

Schließlich wird zum Entleeren des mit Prozeßgas gefüllten Gasbehälters das Prozeßgas aus dem Gasbehälter abgesaugt und gleichzeitig Hilfsgas mit geringerer oder höherer Dichte als das Prozeßgas derart beruhigt in den Gasbehälter eingebracht, daß keine wesentliche Vermischung mit dem Prozeßgas erfolgt, gemäß dem in Anspruch 3 definierten Verfaren.

Dabei wird im Falle einer geringeren Dichte des Prozeßgases gegenüber dem Hilfsgas das Prozeßgas im oberen Bereich des Gasbehälters abgesaugt und gleichzeitig im unteren Bereich des Gasbehälters das Hilfsgas eingebracht. Umgekehrt wird im Falle einer höheren Dichte des Prozeßgases gegenüber dem Hilfsgas das Prozeßgas im unteren Bereich des Gasbehälters abgesaugt und gleichzeitig im oberen Bereich des Gasbehälters das Hilfsgas eingebracht.

Um das Prozeßgas beruhigt in den Gasbehälter einbringen zu können, wird es bevorzugt über den Querschnitt des Gasbehälters oder an der oberen und unteren Wandung verteilt mit geringer Strömungsgeschwindigkeit eingebracht Hierzu sind z.B. sog. Plattenbelüfter oder Siebrohre vorgesehen, die sich über einen Großteil des Gasbehälterquerschnitts oder der Gasbehälterlänge erstrecken. Bevorzugt ist die zweckmäßigerweise rund oder flächig ausgebildete Gaseintragseinrichtung an der höchsten bzw. niedrigsten Stelle des Gasbehälters in dessen Innenraum angebracht. Es sind aber auch nicht flächig ausgebildete Gaseintragseinrichtungen denkbar. Entsprechend wird beim Entleeren des Gasbehälters auch das Hilfsgas vorzugsweise über den Querschnitt des Gasbehälters verteilt, mit geringer Strömungsgeschwindigkeit eingebracht Ebenso wird beim Abzug des Prozeßgases darauf geachtet, daß keine Verwirbelung des im Gasbehälter befindlichen Prozeßgases stattfindet.

Die Erfindung ist insbesondere für sehr große Gasbehälter, z.B. Luftschiffe, mit einem Gasvolumen von mehr als 6.000 m³, vorzugsweise mehr als 50.000, insbesondere 50.000 bis 2.000.000 m³, (z.B. 400.000 m³), vorgesehen. Beim Befüllen derartiger Gasbehälter wird das Prozeßgas vorzugsweise in ca. 10 bis 100 Stunden mit einem Volumenstrom von mindestens 500 m³ₙ/h in den Gasbehälter eingebracht. Heim Reinigen des im Gasbehälter enthaltenen Prozeßgases wird das gereinigte Prozeßgas vorteilhafterweise mit einem Volumenstrom von mindestens 500 m³ₙ/h in den Gasbehälter eingeleitet und verunreinigtes Prozeßgas abgesaugt.

Da bei sehr großen Gasbehältern mit Gasfassungsvermögen von z.B. 400.000 m³ die für die Befüllung des Gasbehälters benötigte Gasmenge nicht mehr unmittelbar mittels Gastransportfahrzeugen, z.B. Flaschentrailem bereitgestellt werden kann, ist gemäß einer Weiterentwicklung des Erfindungsgedankens vorgesehen, das Prozeßgas in Gasdruckspeichem zwischenzutagem, welche nach und nach aus Gastransportfahrzeugen befüllt werden können. Auf diese Weise können über einen längeren Zeitraum verteilt Gastransportfahrzeuge das Prozeßgas anliefern, das mittels Hochdruckkompressoren auf einen Druck von z.B. 80 bar komprimiert wird und in den Gasdruckspeichem gelagert wird. Dadurch steht die für die Befüllung des Gasbehälters notwendige Gasmenge jederzeit zur Verfügung. Somit können auch großvolumige Gasbehälter innerhalb kürzester Zeit mit großen Mengen an Prozeßgas befüllt werden.

Beim Reinigen des im Gasbehälter enthaltenen Prozeßgases werden vorzugsweise mindestens zwei Gasdruckspeicher verwendet, von denen jeweils mindestens einer mit verunreinigtem Prozeßgas aus dem Gasbehälter gefüllt wird, während aus mindestens einem anderen Gasdruckspeicher gereinigtes Prozeßgas zur Befüllung des Gasbehälters entnommen wird. Dabei wird das im Gasdruckspeicher zwischengelagerte verunreinigte Prozeßgas zweckmäßiger Weise mittels einer Membranreinigungsanlage gereinigt und als gereinigtes Prozeßgas wieder im Gasdruckspeicher zwischengelagert. Die Reinigung des Prozeßgases kann auch z.B. durch Adsorptions- oder Rektifikationsverfahren erfolgen.

Insgesamt wird durch die Verwendung von Gasdruckspeichem die für das Befüllen, Reinigen und Entleeren von großvolumigen Gasbehältem, insbesondere Luftschiffen, benötigte Zeit minimiert. Dies hat bei Luftschiffen zur Folge, daß deren Standzeiten auf eine wirtschaftlich vertretbare Dauer begrenzt werden können.

Das vorgeschlagene Verfahren eignet sich für alle denkbaren Gase, für den Einsatz in Luftschiffen ist insbesondere die Verwendung von Helium oder Wasserstoff oder einem Helium-Wasserstoff-Gemisch vorgesehen. Die Erfindung kann aber auch z.B. für mit Wasserstoff gefüllte Ballone oder für mit Helium, Wasserstoff oder anderen Gasen befüllten Großtanks, Gasometer usw. verwendet werden. Beim Einsatz in Großtanks und Gasometem wird zweckmäßigerweise als Hilfsgas anstelle der sonst bevorzugten Luft bevorzugt Stickstoff verwendet.

Die Erfindung bietet eine ganze Reihe von Vorteilen. Beispielsweise ergibt sich als Folge der erfindungsgemäßen Vorgehensweise, daß der Gasbehälter, insbesondere das Luftschiff, immer prall gefüllt bleibt, so daß Spannungsänderungen in der Gasbehälterhülle minimiert werden. Der wesentliche Vorteil der Erfindung besteht jedoch darin, daß das Befüllen, Reinigen und Entleeren des Gasbehälters sehr schnell erfolgen kann. Dadurch wird erst bei großvotumigen Luftschiffen die Wirtschaftlichkeit dieses Transportsystems ermöglicht, da notwendige Standzeiten minimiert werden können.

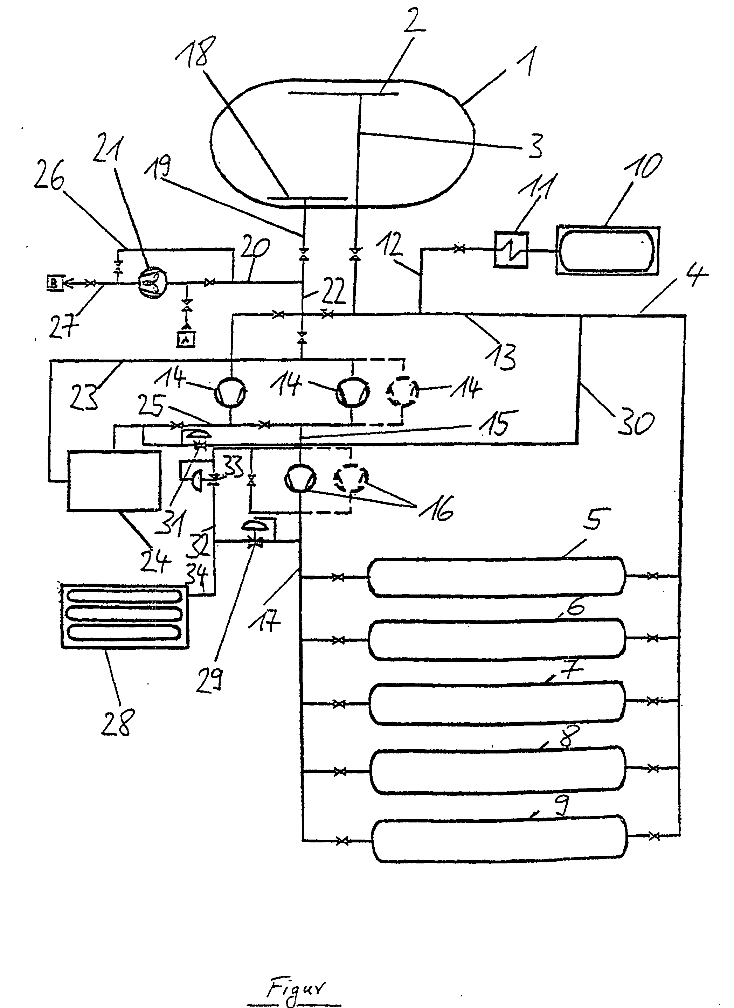

Im folgenden soll die Erfindung anhand eines in der Figur schematisch dargestellten Ausführungsbeispiels näher erläutert werden:

Das nachstehende Ausführungsbeispiel betrifft das Befüllen, Reinigen und Entleeren von großvolumigen Luftschiffen mit einem Gasfassungsvermögen von 400.000 m³ₙ.

Im vorliegenden Fall wird als Prozeßgas Helium und als Hilfsgas Luft verwendet. Bevor das Luftschiff 1 mit Helium gefüllt wird, wird es zunächst mit Luft vollständig gefüllt. Hierzu wird bei A Luft angesaugt und über ein oder mehrere Luftgebläse 21 sowie über Leitungen 26, 20 und 19 in das Luftschiff 1 eingebracht. Erst nach vollständiger Füllung des Luftschiffs mit Luft wird über eine oder mehrere Gasverteileinhchtung(en) 2 Helium in das Luftschiff 1 eingeleitet. Gleichzeitig wird über eine oder mehrere Gasverteileinrichtung(en) 18 und die Leitungen 19, 20 und 27 mittels eines oder mehrerer Gebläse (21) die Luft aus dem Luftschiff 1 abgezogen. Da das Luftschiff 1 somit immer kontrolliert prall gefüllt bleibt, sind Spannungsänderungen in der Hülle des Luftschiffs minimiert.

Zur Befüllung des Luftschiffs 1 mit Helium muß zunächst die notwendige Heliumgasmenge zur Verfügung gestellt werden. Hierfür sind Heliumdruckspeicher 5, 6, 7 und 8 vorgesehen, die nach und nach mit Helium, das mittels Heliumtransportfahrzeugen angeliefert wird, aufgefüllt werden. Ein zusätzlicher Heliumdruckspeicher 9 bleibt für die weiter unten beschriebene Aufnahme von verunreinigtem Helium, welches vom Luftschiff 1 zu Reinigungszwecken abgezogen wird, frei.

Für die Anlieferung des Heliums sind im vorliegenden Ausführungsbeispiel vorzugsweise Lastkraftwagen vorgesehen, die Flüssigheliumcontainer 10 mit einem Fassungsvermögen von 40.000 l (11.000 US Gallonen) aufweisen. Bei jeder Lieferung wird der Flüssigheliumcontainer 10 entleert und das flüssige Helium über einen Verdampfer 11 geleitet, worauf hin das gasförmige Helium mittels Leitungen 12 und 13 Niederdruckkompressoren 14 zugeführt wird, die das gasförmige Helium auf einen Druck von mindestens 500 kPa verdichten. Mit einem Fördervolumenstrom von mindestens 100 m³ₙ/h wird das gasförmige Helium mittels einer Leitung 15 Hochdruckkompressoren 16 zugeführt, die das Helium weiter auf einen Druck von mindestens 1 MPa komprimieren. Schließlich wird das hochverdichtete Helium über Leitung 17 einem der Heliumdruckspeicher 5, 6, 7 oder 8 zugeführt, welcher noch über freie Kapazität verfügt. Alternativ kann die Anlieferung von Helium in Gasflaschentransportfahrzeugen (sog. 'Tube Trailem") (28) erfolgen, die üblicherweise einen Anlieferdruck von 2 bis 3 MPa aufweisen; das Helium wird dann über Leitung 34 ggf. über einen Druckminderer 29 auf das Druckniveau der dahinter liegenden Leitung 17 gedrosselt, und das Helium wird entsprechend der angelieferten Reinheitsklasse einem der Heliumdruckspeicher 5, 6, 7 oder 8 zugeführt, welcher noch über freie Kapazität für die angelieferte Reinheitsklasse verfügt. Sobald der Druck aus dem Gasflaschentransportfahrzeug dem Druck in der Druckleitung entspricht, wird über ein Ventil umgeschaltet, so daß dann das Helium über Leitungen 34 und 32 sowie ein Druckregelventil 33 vor den Kompressor 16 geführt wird. Jeder der Heliumdruckspeicher weist ein Gasfassungsvermögen von mindestens 50.000 m³ₙ auf. Das Heliumgas wird in dem Heliumdruckspeicher bei einem Druck von mindestens 1 MPa gelagert Zur Befüllung des Luftschiffs 1 mit einem Gasfassungsvermögen von 400.000 m³ₙ müssen die Heliumdruckspeicher 5, 6, 7 und 8 ausreichend mit Helium gefüllt werden, damit die Befüllung schnell vonstatten gehen kann. Ggf. können die Heliumdruckspeicher auch durch Flüssigheliumcontainer und/oder Gasflaschentransportfahrzeuge ergänzt werden.

Während die Befüllung der Heliumdruckspeicher aus Flüssigheliumcontainem oder Gasflaschentransportfahrzeugen über einen längeren Zeitraum erfolgen kann, steht nach der Befüllung der Heliumdruckspeicher die für die Befüllung des Luftschiffes notwendige Heliumgasmenge sofort zur Verfügung.

Über Leitungen 4, 13 und 3 wird das Helium von den Heliumdruckspeichem 5, 6, 7 und 8 einer Gasverteileinrichtung 2, die im oberen Bereich des Luftschiffs 1 im inneren des Luftschiffs 1 angeordnet,ist, zugeführt. Die Gasverteileinrichtung 2 besteht z.B. aus Siebrohren, die z. B. ca. 40 % der oberen Hüllenlänge des Luftschiffs 1 abdecken. Über die Gasverteileinrichtung 2 wird das Helium beruhigt in das Luftschiff eingeleitet. Dabei wird darauf geachtet, daß es möglichst zu keinen oder nur geringen turbulenten Gasströmungen im Inneren des Luftschiffs 1 kommt. Gleichzeitig wird über eine Gasverteileinrichtung 18 im Luftschiff befindliches Gas (Luft, Helium oder ein Helium-Luft-Gemisch aus der Mischzone) aus dem unteren Bereich des Luftschiffs 1 abgezogen, wobei ebenfalls darauf geachtet wird, daß es möglichst zu keiner oder nur zu geringer Verwirbelung im Gasvolumen des Luftschiffs 1 kommt und das Luftschiff 1 prall bleibt. Die über die Gasverteileinrichtung 18 abgezogene Gasmenge wird über die durch Gasverteileinrichtung 2 eingebrachte Heliummenge ersetzt, ohne daß eine wesentliche Vermischung des zugeführten Heliums mit dem im Luftschiff 1 befindlichen Gas eintritt. Abgezogene Gasmengen, die überwiegend Luft oder Luft-Helium-Gemische enthalten, die aufgrund niedriger Heliumkonzentration nicht über die Membranreinigungsanlage 24 gefahren werden können, werden über Gasverteileinrichtung 18, Leitungen 19, 20, Luftgebläse 21 und Leitung 27 in die Atmosphäre abgeblasen. Abgezogene Gasmengen, die eine für den Reinigungsprozeß ausreichende Heliumkonzentration enthalten, können der direkten (über Gasverteileinrichtung 18, Leitungen 19, 22, Kompressor 14, Leitung 25, Reiniger 24, Leitung 23, Kompressoren 14, Leitung 15, Kompressor 16, Leitung 17 in einen der freien Druckspeicher für reines Helium 5-9) oder über den Umweg der Heliumdruckspeicher einer indirekten Reinigung (über Gasverteileinrichtung 18, Leitungen 19, 22, Kompressor 14, Leitung 15, Kompressor 16, Leitung 17 in einen freien Druckspeicher für unreines Helium 5-9, dann über Leitung 4, 30, Druckminderer 31, Leitung 25, Reiniger 24, Leitung 23, Kompressoren 14, Leitung 15, Kompressor 16, Leitung 17 in einen der freien Druckspeicher für reines Helium 5-9) zugeführt werden.

Im Laufe des Betriebs eines Luftschiffs tritt unter anderem durch Diffusionsvorgänge eine Verunreinigung des Prozeßgases ein, die eine unerwünschte Auftriebsverminderung bewirkt. Bei Erreichen einer maximalen Luftverunreinigung von z.B. 5 % in der Heliumfüllung des Luftschiffs 1, was einer 5 %igen Verringerung des Auftriebs entspricht, muß eine Reinigung des Gasinhalts des Luftschiffs 1 auf z.B. mindestens 98 % Helium erfolgen. Hierzu wird Helium ausreichender Reinheit aus einem der Heliumdruckspeicher 5, 6. 7 oder 8 mit z.B. bis zu 40.000 m³ₙ/h über die Leitungen 4, 13 und 3 sowie die Gasverteileinrichtung 2 beruhigt im oberen Teil des Luftschiffs 1 eingefüllt und gleichzeitig verunreinigtes Helium über die Gasverteileinrichtung 18 und Leitungen 19 und 22 vom unteren Teil des Luftschiffs 1 mittels der Kompressoren 14 und 16 abgesaugt und in einem leeren Heliumdruckspeicher 9 zwischengelagert. Die Heliumdruckspeicher 5, 6, 7 und 8 werden nach und nach zur Befüllung des Luftschiffs 1 entleert und die Heliumdruckspeicher 9, 8, 7 und 6 werden wieder mit verunreinigtem Helium aus dem Luftschiff 1 befüllt. Auf diese Weise wird der Gasinhalt des Luftschiffs 1 vollständig ausgetauscht, so daß am Ende das Luftschiff 1 völlig mit Helium ausreichender Reinheit gefüllt ist, während vier der Heliumdruckspeicher mit verunreinigtem Helium gefüllt sind und ein Heliumdruckspeicher wieder leer bleibt. Es erfolgt so ein Schnellaustausch der Gasfüllung des Luftschiffs 1, während die eigentliche Reinigung des Heliums durchgeführt werden kann, wenn das Luftschiff 1 wieder im bestimmungsgemäßen Betrieb ist.

Zur Reinigung des Heliums wird das verunreinigte Helium den Heliumdruckspeichem entnommen und über Leitungen 4 und 13 sowie dem Kompressor 14 und Leitung 25 einer Membranreinigungsanlage 24 zugeführt. Die Membranreinigungsanlage ist so ausgelegt, daß sie bei einem Durchsatz von mindestens 100 m³ₙ/h das Helium von einem Reinheitsgrad von mindestens 50 % auf mindestens 95 % reinigen kann. Das so gereinigte Helium wird über Leitung 23 den Kompressoren 14 und weiter über Leitung 15 den Kompressoren 16 zugeführt, wo es auf einen Druck von mindestens 1 MPa komprimiert wird und schließlich über Leitung 17 in einen freien Heliumdruckspeicher 5, 6, 7 oder 8 eingeleitet wird. Auf diese Weise werden nach und nach die mit verunreinigtem Helium gefüllten Druckspeicher 6, 7, 8 und 9 entleert, das Helium in der Membranreinigungsanlage 24 gereinigt und die Heliumdruckspeicher 5, 6, 7 und 8 wieder mit gereinigtem Helium befüllt. Am Ende enthalten vier der Heliumdruckspeicher gereinigtes Helium, während einer wieder leer ist.

Falls der Gasinhalt des Luftschiffs 1 beispielsweise für Wartungsarbeiten völlig entleert werden soll, wird umgekehrt zu der vorgenannten Vorgehensweise das Helium oben über die Gasverteileinrichtung 2 abgesaugt und gleichzeitig unten über die Gasverteileinrichtung 18 Luft eingespeist. Das über Leitung 3 und die Kompressoren 14 und 16 abgesaugte Helium wird in den Heliumdruckspeichem zwischengelagert.

## Patentansprüche

1. Verfahren zum Befüllen von großvolumigen Gasbehältern, insbesondere Luftschiffen, mit einem Prozeßgas, **dadurch gekennzeichnet, daß** der Gasbehälter (1) zunächst mit einem Hilfsgas, welches eine höhere oder geringere Dichte als das Prozeßgas aufweist, gefüllt wird und anschließend das Prozeßgas derart beruhigt in den Gasbehälter (1) eingebracht wird, daß keine wesentliche Vermischung mit dem Hilfsgas erfolgt, indem Strömungsgeschwindigkeit, Einströmquerschnitt und Eintragungsort so abgestimmt werden, daß eine Verwirbelung des eingetragenen Prozeßgases weitgehend ausgeschlossen wird, wobei im Falle einer geringeren Dichte des Prozeßgases gegenüber dem Hilfsgas das Prozeßgas im oberen Bereich (2) des Gasbehälters (1) eingebracht und gleichzeitig im unteren Bereich (18) des Gasbehälters (1) das Hilfsgas oder ein Gemisch aus Hilfsgas und Prozeßgas abgesaugt wird, während umgekehrt im Falle einer höheren Dichte des Prozeßgases gegenüber dem Hilfsgas das Prozeßgas im unteren Bereich (18) des Gasbehälters (1) eingebracht und gleichzeitig im oberen Bereich (2) des Gasbehälters (1) das Hilfsgas oder ein Gemisch aus Hilfsgas und Prozeßgas abgesaugt wird.

2. Verfahren zum Reinigen des in einem großvolumigen Gasbehälter, insbesondere Luftschiff, enthaltenen Prozeßgases, **dadurch gekennzeichnet, daß** Prozeßgas mit einer höheren Reinheit als das im Gasbehälter (1) enthaltene Prozeßgas derart beruhigt in den Gasbehälter (1) eingebracht wird, daß keine wesentliche Vermischung mit dem im Gasbehälter befindlichen verunreinigten Prozeßgas erfolgt, indem Strömungsgeschwindigkeit, Einströmquerschnitt und Eintragungsort so abgestimmt werden, daß eine Verwirbelung des eingetragenen Prozeßgases weitgehend ausgeschlossen wird, wobei im Falle einer zu einer Dichteerhöhung des Prozeßgases führenden Verunreinigung des Prozeßgases das Prozeßgas mit der höheren Reinheit im oberen Bereich (2) des Gasbehälters (1) eingebracht und gleichzeitig im unteren Bereich (18) des Gasbehälters (1) verunreinigtes Prozeßgas abgesaugt wird, während umgekehrt im Falle einer zu einer Dichteerniedrigung des Prozeßgases führenden Verunreinigung des Prozeßgases das Prozeßgas mit der höheren Reinheit im unteren Bereich (18) des Gasbehälters (1) eingebracht und gleichzeitig im oberen Bereich (2) des Gasbehälters (1) verunreinigtes Prozeßgas abgesaugt wird.

3. Verfahren zum Entleeren von mit Prozeßgas gefüllten großvolumigen Gasbehältern, insbesondere Luftschiffen, **dadurch gekennzeichnet, daß** das Prozeßgas aus dem Gasbehälter (1) abgesaugt wird und gleichzeitig Hilfsgas mit höherer oder geringerer Dichte als das Prozeßgas derart beruhigt in den Gasbehälter (1) eingebracht wird, daß keine wesentliche Vermischung mit dem Prozeßgas erfolgt, indem Strömungsgeschwindigkeit, Einströmquerschnitt und Eintragungsort so abgestimmt werden, daß eine Verwirbelung des eingetragenen Hilfsgases weitgehend ausgeschlossen wird, wobei im Falle einer geringeren Dichte des Prozeßgases gegenüber dem Hilfsgas das Prozeßgas im oberen Bereich (2) des Gasbehälters (1) abgesaugt und gleichzeitig im unteren Bereich (18) des Gasbehälters (1) das Hilfsgas eingebracht wird, während umgekehrt im Falle einer höheren Dichte des Prozeßgases gegenüber dem Hilfsgas das Prozeßgas im unteren Bereich (18) des Gasbehälters (1) abgesaugt und gleichzeitig im oberen Bereich (2) des Gasbehälters (1) das Hilfsgas eingebracht wird.

4. Verfahren nach Anspruch 1 oder 2, **dadurch gekennzeichnet, daß** das Prozeßgas verteilt mit geringer Strömungsgeschwindigkeit eingebracht wird.

5. Verfahren nach Anspruch 3, **dadurch gekennzeichnet, daß** das Hilfsgas verteilt mit geringer Strömungsgeschwindigkeit eingebracht wird.

6. Verfahren nach einem der Ansprüche 1 bis 5, **dadurch gekennzeichnet, daß** Gasbehälter (1) mit einem Gasvolumen von mehr als 50.000 m³ eingesetzt werden.

7. Verfahren nach Anspruch 6, **dadurch gekennzeichnet, daß** beim Befüllen des Gasbehälters (1) das Prozeßgas mit einem Volumenstrom von mindestens 500 m³ₙ/h in den Gasbehälter (1) eingebracht wird.

8. Verfahren nach Anspruch 6, **dadurch gekennzeichnet, daß** beim Reinigen des im Gasbehälter (1) enthaltenen Prozeßgases das Prozeßgas mit der höheren Reinheit mit einem Volumenstrom von mindestens 500 m³ₙ/h in den Gasbehälter (1) eingebracht wird.

9. Verfahren nach einem der Ansprüche 1 bis 8, **dadurch gekennzeichnet, daß** zwischen den Dichten des Hilfsgases und des Prozeßgases eine Differenz von mindestens 15 % besteht.

10. Verfahren nach einem der Ansprüche 1 bis 9, **dadurch gekennzeichnet, daß** als Prozeßgas ein Gas oder Gasgemisch mit geringerer Dichte als Luft, insbesondere Helium, Wasserstoff oder ein Helium-Wasserstoff-Gemisch eingesetzt wird, während als Hilfsgas ein Gas oder Gasgemisch mit gleicher oder höherer Dichte als Luft, insbesondere Luft, eingesetzt wird.

11. Verfahren nach einem der Ansprüche 1 bis 10, **dadurch gekennzeichnet, daß** das Prozeßgas in Gasdruckspeichem (5, 6, 7, 8, 9) zwischengelagert wird, so daß für ein schnelles Befüllen des Gasbehälters ausreichende Prozeßgasmengen zur Verfügung stehen.

12. Verfahren nach Anspruch 11, **dadurch gekennzeichnet, daß** beim Reinigen des im Gasbehälter (1) enthaltenen Prozeßgases mindestens zwei Gasdruckspeicher (5, 6, 7, 8 und 9) verwendet werden, von denen jeweils mindestens einer (9) mit verunreinigtem Prozeßgas aus dem Gasbehälter (1) oder aus einem Gasflaschentransportfahrzeug (28) gefüllt wird, während aus mindestens einem anderen (5, 6, 7, 8) gereinigtes Prozeßgas zur Befüllung des Gasbehälters (1) entnommen wird.

13. Verfahren nach Anspruch 12, **dadurch gekennzeichnet, daß** das in den Gasdruckspeichem (5, 6, 7, 8, 9) zwischengelagerte verunreinigte Prozeßgas mittels Adsorption, Rektifikation oder Membranfiltration gereinigt wird und als gereinigtes Prozeßgas wieder in den Gasdruckspeichem (5, 6, 7, 8, 9) zwischengelagert wird.

## Claims

1. Method for filling large-volume gas containers, in particular air ships, with a process gas, **characterised in that** the gas container (1) is first filled with an auxiliary gas which comprises a lower or higher density than the process gas and that afterwards the process gas is introduced gently into the gas container (1) in such a manner that no considerable amalgamation with the process gas takes place, **in that** the flow velocity, the influx cross section and the entry location are adjusted in such a manner that a turbulence of the introduced auxiliary gas is largely excluded, whereby, in the case of a lower density of the process gas compared to the auxiliary gas, the process gas is introduced into the upper region (2) of the gas container (1) and the auxiliary gas is simultaneously extracted at the lower region (18) of the gas container (1), while vice versa, in the case of a higher density of the process gas compared to the auxiliary gas, the process gas is introduced into the lower region (18) of the gas container (1) and the auxiliary gas or a mixture of an auxiliary gas and process gas is simultaneously extracted at the upper region (2) of the gas container (1).

2. Method for cleaning of the process gas contained in a large-volume gas container, in particular air ship, **characterised in that** process gas having a larger purity than the process gas contained in the gas container (1) introduced gently into the gas container (1) in such a manner that no considerable amalgamation with the process gas takes place, **in that** the flow velocity, the influx cross section and the entry location are adjusted in such a manner that a turbulence of the introduced process gas is largely excluded, whereby, in the case of a contamination of the process gas which leads to a density increase, the process gas with the higher purity is introduced into the upper region (2) of the gas container (1) and contaminated process gas is simultaneously extracted at the lower region (18) of the gas container (1), while vice versa, in the case of a contamination of the process gas which leads to a density decrease, the process gas with the higher purity is introduced into the lower region (18) of the gas container (1) and the contaminated process gas is simultaneously extracted at the upper region (2) of the gas container (1).

3. Method for emptying large-volume gas containers filled with process gas, in particular air ships, **characterised in that** the process gas is extracted from the gas container (1) and simultaneously auxiliary gas having a higher or lower density than the process gas is introduced gently into the gas container (1) in such a manner that no considerable amalgamation with the process gas takes place, **in that** the flow velocity, the influx cross section and the entry location are adjusted in such a manner that a turbulence of the introduced auxiliary gas is largely excluded, whereby, in the case of a lower density of the process gas compared to the auxiliary gas, the process gas is extracted at the upper region (2) of the gas container (1) and the auxiliary gas is simultaneously introduced into the lower region (18) of the gas container (1), while vice versa, in the case of a higher density of the process gas compared to the auxiliary gas, the process gas is extracted at the lower region (18) of the gas container (1) and the auxiliary gas is simultaneously introduced into the upper region (2) of the gas container (1).

4. Method according to claim 1 or 2, **characterised in that** the process gas is introduced with a small flow velocity in a distributed manner.

5. Method according to claim 3, **characterised in that** the auxiliary gas is introduced with a small flow velocity in a distributed manner.

6. Method according to one of claims 1 to 5, **characterised in that** gas containers (1) having a gas volume of more than 50000 m³ are used.

7. Method according to claim 6, **characterised in that**, during the filling of the gas container (1), the process gas is introduced into the gas container (1) with a volume stream of at least 500 m³ₙ/h.

8. Method according to claim 6, **characterised in that**, during the cleaning of the process gas contained in the gas container (1), the process gas having the higher purity is introduced into the gas container (1) with a volume stream of at least 500 m³_{n/}h.

9. Method according to one of claims 1 to 8, **characterised in that** a difference of at least 15% consists between the densities of the auxiliary gas and the process gas.

10. Method according to one of claims 1 to 9, **characterised in that** a gas or gas mixture having a lower density than air, in particular helium, hydrogen or a helium/hydrogen mixture is used as process gas, while a gas or a gas mixture having the same or higher density than air, in particular air, is used as auxiliary gas.

11. Method according to one of claims 1 to 10, **characterised in that** the process gas is located in compressed gas tanks (5, 6, 7, 8, 9), so that sufficient process gas amounts are available for a fast filling of the gas container.

12. Method according to claim 11, **characterised in that**, during the cleaning of the process gas contained in the gas container (1), at least two compressed gas tanks (5, 6, 7, 8 and 9) are used, of which at least one (9) is filled with contaminated process gas from the gas container (1) or from a gas bottle transport vehicle (28), while cleaned process gas for filling the gas container (1) is taken from at least one other (5, 6, 7, 8).

13. Method according to claim 12, **characterised in that** the contaminated process gas which is located in the compressed gas tanks (5, 6, 7, 8, 9) is cleaned by means of adsorption, rectification, or membrane filtration and is located again in the compressed gas tanks (5, 6, 7, 8, 9) as a cleaned process gas.

## Revendications

1. Procédé pour remplir d'un gaz de travail des réservoirs de gaz à grand volume, en particulier des aérostats, **caractérisé en ce que** le réservoir de gaz (1) est tout d'abord rempli d'un gaz auxiliaire qui a une densité supérieure ou inférieure à celle du gaz de travail, et ensuite le gaz de travail est introduit dans le réservoir de gaz (1) d'une manière tranquille telle qu'il ne se produit pas de mélange substantiel avec le gaz auxiliaire, du fait que la vitesse d'écoulement, la section d'introduction et le point d'entrée sont définis de telle façon qu'un tourbillonnement du gaz de travail introduit est largement exclu, dans lequel, dans le cas d'une densité plus faible du gaz de travail par rapport au gaz auxiliaire, le gaz de travail est introduit dans la zone supérieure (2) du réservoir de gaz (1) et simultanément le gaz auxiliaire ou un mélange de gaz auxiliaire et de gaz de travail est aspiré dans la zone inférieure (18) du réservoir de gaz (1), tandis qu'au contraire dans le cas d'une densité plus élevée du gaz de travail par rapport au gaz auxiliaire le gaz de travail est introduit dans la zone inférieure (18) du réservoir de gaz (1) et simultanément le gaz auxiliaire ou un mélange de gaz auxiliaire et de gaz de travail est aspiré dans la zone supérieure (2) du réservoir de gaz (1).

2. Procédé pour purifier le gaz de travail contenu dans un réservoir de gaz à grand volume, en particulier un aérostat, **caractérisé en ce que** du gaz de travail d'une pureté supérieure à celle du gaz de travail contenu dans le réservoir de gaz (1) est introduit dans le réservoir de gaz (1) d'une manière tranquille telle qu'il ne se produit pas de mélange substantiel avec le gaz de travail contaminé se trouvant dans le réservoir de gaz, du fait que la vitesse d'écoulement, la section d'introduction et le point d'entrée sont définis de telle façon qu'un tourbillonnement du gaz de travail introduit est largement exclu, dans lequel, dans le cas d'une contamination du gaz de travail conduisant à une élévation de la densité du gaz de travail, le gaz de travail de pureté plus élevée est introduit dans la zone supérieure (2) du réservoir de gaz (1) et simultanément du gaz de travail contaminé est aspiré dans la zone inférieure (18) du réservoir de gaz (1), tandis qu'au contraire dans le cas d'une contamination du gaz de travail conduisant à une diminution de la densité du gaz de travail le gaz de travail de pureté plus élevée est introduit dans la zone inférieure (18) du réservoir de gaz (1) et simultanément du gaz de travail contaminé est aspiré dans la zone supérieure (2) du réservoir de gaz (1).

3. Procédé pour purger des réservoirs de gaz à grand volume remplis de gaz de travail, en particulier des aérostats, **caractérisé en ce que** le gaz de travail est aspiré hors du réservoir de gaz (1) et simultanément du gaz auxiliaire de densité supérieure ou inférieure à celle du gaz de travail est introduit dans le réservoir de gaz (1) d'une manière tranquille telle qu'il ne se produit pas de mélange substantiel avec le gaz de travail, du fait que la vitesse d'écoulement, la section d'introduction et le point d'entrée sont définis de telle façon qu'un tourbillonnement du gaz auxiliaire introduit est largement exclu, dans lequel, dans le cas d'une densité inférieure du gaz de travail par rapport au gaz auxiliaire, le gaz de travail est aspiré dans la zone supérieure (2) du réservoir de gaz (1) et simultanément le gaz auxiliaire est introduit dans la zone inférieure (18) du réservoir de gaz (1), tandis qu'au contraire dans le cas d'une densité supérieure du gaz de travail par rapport au gaz auxiliaire, le gaz de travail est aspiré dans la zone inférieure (18) du réservoir de gaz (1) et simultanément le gaz auxiliaire est introduit dans la zone supérieure (2) du réservoir de gaz (1).

4. Procédé selon la revendication 1 ou 2, **caractérisé en ce que** le gaz de travail est introduit de manière répartie à une faible vitesse d'écoulement.

5. Procédé selon la revendication 3, **caractérisé en ce que** le gaz auxiliaire est introduit de manière répartie à une faible vitesse d'écoulement.

6. Procédé selon l'une des revendications 1 à 5, **caractérisé en ce que** sont employés des réservoirs de gaz (1) d'un volume de gaz de plus de 50.000 m³.

7. Procédé selon la revendication 6, **caractérisé en ce que** lors du remplissage du réservoir de gaz (1) le gaz de travail est introduit à un débit volumique d'au moins 500 m³/h dans le réservoir de gaz (1).

8. Procédé selon la revendication 6, **caractérisé en ce que** lors de la purification du gaz de travail contenu dans le réservoir de gaz (1) le gaz de travail de pureté plus élevée est introduit à un débit volumique d'au moins 500 m³/h dans le réservoir de gaz (1).

9. Procédé selon l'une des revendications 1 à 8, **caractérisé en ce qu'**il existe entre les densités du gaz auxiliaire et du gaz de travail une différence d'au moins 15%.

10. Procédé selon l'une des revendications 1 à 9, **caractérisé en ce qu'**est employé comme gaz de travail un gaz ou mélange de gaz d'une densité inférieure à celle de l'air, en particulier de l'hélium, de l'hydrogène ou un mélange hélium-hydrogène, tandis qu'est employé comme gaz auxiliaire un gaz ou mélange de gaz d'une densité égale ou supérieure à celle de l'air, en particulier de l'air.

11. Procédé selon l'une des revendications 1 à 10, **caractérisé en ce que** le gaz de travail est entreposé dans des accumulateurs de pression de gaz (5, 6, 7, 8, 9), de sorte que des quantités de gaz de travail suffisantes sont disponibles pour un remplissage rapide du réservoir de gaz.

12. Procédé selon la revendication 11, **caractérisé en ce que**, lors de la purification du gaz de travail contenu dans le réservoir de gaz (1), au moins deux accumulateurs de pression de gaz (5, 6, 7, 8 et 9) sont utilisés, dont l'un au moins (9) est rempli de gaz de travail contaminé provenant du réservoir de gaz (1) ou d'un véhicule de transport de bouteilles de gaz (28), tandis que d'au moins un autre (5, 6, 7, 8) est prélevé du gaz de travail purifié pour remplir le réservoir de gaz (1).

13. Procédé selon la revendication 12, **caractérisé en ce que** le gaz de travail contaminé entreposé dans les accumulateurs de pression de gaz (5, 6, 7, 8, 9) est purifié par adsorption, rectification ou filtrage membranaire et est à nouveau entreposé dans les accumulateurs de pression de gaz (5, 6, 7, 8, 9) en tant que gaz de travail purifié.
